# EUROPÄISCHE PATENTANMELDUNG

(11) **EP 1 947 581 A1**
(43) Veröffentlichungstag der Anmeldung: **23.07.2008**
(21) Anmeldenummer: 07100870.0
(22) Anmeldetag: 22.01.2007
(51) Int. Cl.: G06F 17/50, G06Q 30/00

(54) **Verfahren zur Konfektionierung von Folien**

(71) Anmelder: Sika Technology AG, 6340 Baar (CH)
(72) Erfinder: Die Erfindernennung liegt noch nicht vor
(74) Vertreter: Sika Patent Attorneys

(57) **Zusammenfassung**

Bei einem Verfahren zur Konfektionierung von Folien umfasst dieses im wesentlichen die folgenden Schritte:
- Eingabe der Foliengeometrie in ein Datenverarbeitungsprogramm, beispielsweise ein CAD Computer Aided Design Programm, durch den Kunden,
- Übermitteln der Daten an den Folienhersteller,
- Einlesen der Daten in ein Datenverarbeitungsprogramm und erstellen eines Konfektionsplanes,
- Ausschneiden der Folienteile aus Rohlingen,
- Versand der fertigen Konfektionen.

## Beschreibung

### Technisches Gebiet

Die Erfindung geht aus von einem Verfahren zur Konfektionierung von Folien nach dem Oberbegriff des ersten Anspruches.

### Stand der Technik

Folien werden so konfektioniert, dass der Kunde die von seinem Datenverarbeitungsprogramm geplanten Daten in Form von ausgedruckten Plänen an den Hersteller der Folien zugesendet hat. Diese Informationen werden anschliessend in einem Standard-CAD Datenverarbeitungsprogramm neu gezeichnet und weiter zu Konfektionsplänen fertig gestellt.

Dieser Ablauf ist infolge des mehrmaligen Zeichnens der Geometrie ineffizient und mit einem grossem Fehlerpotenzial verbunden. Zudem ist die Erstellung der Konfektionspläne auf dem Standard-CAD nur mit grossem Aufwand möglich.

### Darstellung der Erfindung

Der Erfindung liegt die Aufgabe zugrunde, bei einem Verfahren zur Konfektionierung von Folien der eingangs genannten Art den Ablaufprozess für die Herstellung von Konfektionen zu optimieren.

Erfindungsgemäss wird dies durch die Merkmale des ersten Anspruches erreicht.

Kern der Erfindung ist es also, dass das Verfahren zur Konfektionierung von Folien im wesentlichen die folgenden Schritte umfasst:
- Eingabe der Foliengeometrie in ein Datenverarbeitungsprogramm, beispielsweise ein CAD Computer Aided Design Programm, durch den Kunden,
- Übermitteln der Daten an den Folienhersteller,
- Einlesen der Daten in ein Datenverarbeitungsprogramm und erstellen eines Konfektionsplanes,
- Ausschneiden der Folienteile aus Rohlingen,
- Versand der fertigen Konfektionen.

Die Vorteile der Erfindung sind unter anderem darin zu sehen, dass der Ablaufprozess für die Herstellung von Konfektionen für Folien vereinfacht und beschleunigt sowie das Fehlerpotenzial verringert wird.

Es ist besonders zweckmässig, wenn der Kunde ein Zusatzprogramm zur Verfügung gestellt bekommt, mit welchem er einfach und schnell die Unterdachbahnen planen und bestellen kann.
Weiter ist es besonders zweckmässig, wenn der Hersteller ein Hersteller-Datenverarbeitungsprogramm für die Planung von Konfektionen verwendet, welches den Aufwand für die Erstellung der Pläne stark reduziert.

Weitere vorteilhafte Ausgestaltungen der Erfindung ergeben sich aus den abhängigen Patentansprüchen.

### Kurze Beschreibung der Zeichnung

Im folgenden werden anhand der Zeichnung ein Ausführungsbeispiel der Erfindung näher erläutert.

Es zeigt:

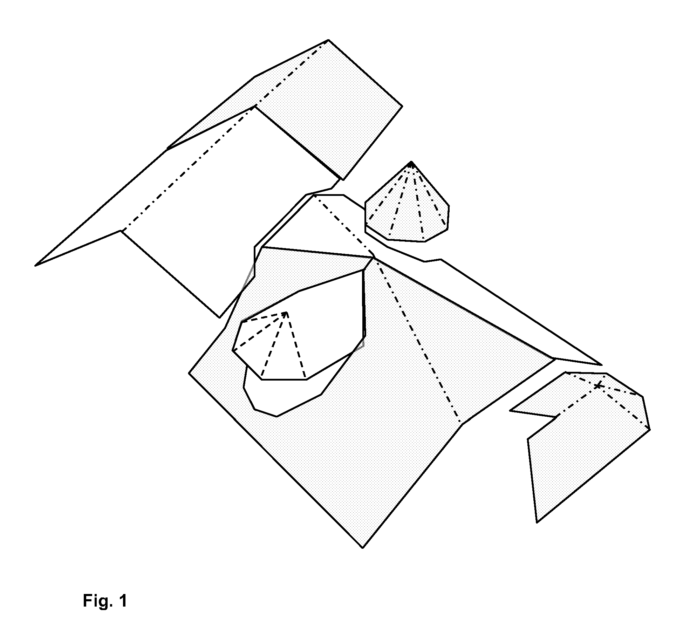

- Fig. 1: Isometrische Darstellung einer fertig konfektionierten Unterdachbahn bestehend aus einzelnen Konfektionen.

### Weg zur Ausführung der Erfindung

Der Begriff Folie, welcher vom lateinischen folium = Blatt abgeleitet ist, bezeichnet im hier verwendeten Zusammenhang einen flächenförmigen Körper, beispielsweise eine Kunststoffdichtungsbahn, eine Metallfolie, insbesondere Bleche, usw..

Als Konfektionierung bezeichnet man in der Produktion und Technik jegliche Art von Aufteilung und/oder Zusammenfügung, Längeneinteilung in verschiedene Materialformate und Grössen, hier wird insbesondere mit Konfektionierung der Zuschnitt von Folien oder allgemein flächenförmiger Körpern nach der obigen Definition gemeint. Die aus der Konfektionierung erhaltenen Teile bezeichnet man als Konfektionen.

Das Verfahren zur Konfektionierung von Folien umfasst im wesentlichen die folgenden Schritte:
- Eingabe der Foliengeometrie in ein Datenverarbeitungsprogramm, beispielsweise ein CAD Computer Aided Design Programm, durch den Kunden,
- Übermitteln der Daten an den Folienhersteller,
- Einlesen der Daten in ein Datenverarbeitungsprogramm und erstellen eines Konfektionsplanes,
- Ausschneiden der Folienteile aus Rohlingen,
- Versand der fertigen Konfektionen.

Das Verfahren zur Konfektionierung von Folien kann weiter optional einen oder mehrere der folgenden Schritte umfassen:
- Verwendung eines Zusatzprogrammes welches in das Datenverarbeitungsprogramm des Kunden integriert wird. Mittels dieses Zusatzprogrammes werden dem Kunden verschiedene Zusatzfunktionen zur Verfügung gestellt und sichergestellt, dass die zu übermittelnden Daten dem Datenformat des Herstellers entsprechen. Als Zusatzfunktionen dienen beispielsweise Funktionstasten zur Erleichterung der Herstellung der Zeichnung, Offertanfrage, Bestellung, usw.. Weiter wird durch das Zusatzprogramm ermöglicht, dass der Kunde weiterhin sein bestehendes Datenverarbeitungsprogramm verwenden kann.
- Übermitteln der Daten auf einem Datenträger, per E-Mail, Webseite des Herstellers, usw..
- Ausschneiden der Folienteile manuell oder maschinell, insbesondere per Roboter
- Verbinden der Folienteile

Am Beispiel der Herstellung einer Unterdachbahnfolie für Steildächer wird im folgenden die Erfindung an einem Ausführungsbeispiel erläutert.
Bei der Planung des Gebäudes wird dem Gebäudeplaner, im folgenden Kunde genannt, ein Zusatzprogramm für sein Datenverarbeitungsprogramm, insbesondere für ein CAD Programm, zum Download von der Homepage oder auf Datenträger vom Hersteller der Unterdachbahn zur Verfügung gestellt. Durch die Installation dieses Zusatzprogrammes wird dieses dem Kunden in seinem bereits bestehenden CAD-Programm aufgeschaltet. Dies erscheint in Form eines Zusatzfensters auf der Programmoberfläche seines Standard-CAD Programmes. Dieses Zusatzfenster verfügt über Funktionstasten (Buttons), welche dem Kunden das Zeichnen der Dachfläche bzw. der Unterdachbahn erleichtert. Sobald der Kunde die Unterdachbahn gezeichnet hat, kann er über weitere Buttons entweder eine Offertanfrage oder eine Bestellung ausführen. Bei beiden gelangt der Kunde zu einem neuen Fenster, in welchem er zusätzliche Informationen wie Dachsystem, Kommission, etc., eingeben kann. Nach Beendigung dieser Abfrage werden die benötigten Informationen aus der CAD-Zeichnung exportiert und in Form einer Datei direkt als Attachement an ein E-Mail angehängt. Die E-Mail Adresse sowie die vorher eingegebenen Zusatzangaben, z.B. Kommission etc., werden automatisch im E-Mail aufgeführt. Falls kein E-Mail zur Verfügung steht, kann die Datei auf einen externen Datenträger, z.B. Diskette, CD-Rom, usw., abgespeichert werden und allenfalls die Zusatzinformationen ausgedruckt werden. Die Daten können auch über ein Web-Interface des Herstellers direkt zu diesem übermittelt werden. Die vom Kunden zugesandte Datei wird dann mit einem Herstellungs Datenverarbeitungsprogramm, auch Producer-CAD-Tool genannt, vom Hersteller eingelesen. Dieses Tool verfügt über spezielle Funktionen, welche die einfache und schnelle Weiterbearbeitung zum Konfektionsplan erlaubt. Sobald der Plan fertig erstellt ist, wird dieser zur Herstellung der Konfektionen weiter geleitet. Dort werden Bahnen zu den benötigten Rohlingen zusammengeschweisst, solche Bahnen können z.B. eine Breite von 2.0 m aufweisen. Die Formen der Unterdachbahnen werden nun vom ausgedruckten Plan auf die Rohlinge übertragen und anschliessend manuell oder maschinell ausgeschnitten, dies kann insbesondere auch automatisch von einem Roboter erledigt werden, welcher direkt auf die Rohlinge zeichnet oder vorteilhafterweise direkt ausschneidet. Weiter können diese einzelnen Teile zu einer Konfektion verbunden, beispielsweise verschweisst, werden. Die fertigen Unterdachbahnen werden zusammengerollt und/oder gefaltet und direkt auf die Baustelle geliefert. Durch die gelieferten Konfektionen hat der Verleger einen reduzierten Aufwand für die Verschweissung und keinen Verschnitt. Dadurch ist er schnell, effizient und vermeidet das Risiko von Wasserinfiltration infolge Baustellenschweissungen.

In Fig. 1 ist eine fertig konfektionierte Unterdachbahn bestehend aus einzelnen Konfektionen dargestellt, welche nach dem oben beschriebenen Verfahren hergestellt wurde.

Selbstverständlich ist die Erfindung nicht auf das gezeigte und beschriebene Ausführungsbeispiel beschränkt.
Die Konfektionierung kann beispielsweise für Unterdachbahnen, insbesondere Sarnafil TU Unterdachbahnen, zur Anwendung kommen. Jedoch können mit demselben Ablaufprozess auch Dampfbremsen, Abdichtungen von Teichen, Flachdächern, Schwimmbecken, Tanks, aber auch Metallfolien wie Bleche usw. konfektioniert werden.

## Patentansprüche

1. Verfahren zur Konfektionierung von Folien,
**dadurch gekennzeichnet, dass** es umfasst:
- Eingabe der Foliengeometrie in ein Datenverarbeitungsprogramm,
- Übermitteln der Daten an den Folienhersteller,
- Einlesen der Daten in ein Datenverarbeitungsprogramm und erstellen eines Konfektionsplanes,
- Ausschneiden der Folienteile aus Rohlingen,
- Versand der fertigen Konfektionen.

2. Verfahren zur Konfektionierung von Folien nach Anspruch 1,
**dadurch gekennzeichnet,**
**dass** ein Zusatzprogrammes verwendet wird, welches in das Datenverarbeitungsprogramm des Kunden integriert wird.

3. Verfahren zur Konfektionierung von Folien nach Anspruch 2,
**dadurch gekennzeichnet,**
**dass** das Zusatzprogrammes Zusatzfunktionen aufweist, welche mittels Funktionstasten zur Verfügung stehen.

4. Verfahren zur Konfektionierung von Folien nach einem der vorhergehenden Ansprüche,
**dadurch gekennzeichnet,**
**dass** das Übermitteln der Daten auf einem Datenträger, und/oder per E-Mail, und/oder der Webseite des Herstellers erfolgt.

5. Verfahren zur Konfektionierung von Folien nach einem der vorhergehenden Ansprüche,
**dadurch gekennzeichnet,**
**dass** die Folienteile manuell oder per Roboter ausgeschnitten werden.

6. Verfahren zur Konfektionierung von Folien nach einem der vorhergehenden Ansprüche,
**dadurch gekennzeichnet,**
**dass** die Folienteile verbunden werden.

7. Verfahren zur Konfektionierung von Folien nach einem der vorhergehenden Ansprüche,
**dadurch gekennzeichnet,**
**dass** Folien-Bahnen zu den benötigten Rohlingen verbunden, insbesondere zusammengeschweisst, werden.

8. Verfahren zur Konfektionierung von Folien nach einem der vorhergehenden Ansprüche,
**dadurch gekennzeichnet,**
**dass** die Folienteile zusammengerollt und/oder gefaltet und auf die Baustelle geliefert werden, und dass der Verleger die so gelieferten Konfektionen vor Ort verbunden, insbesondere verschweisst.

9. Artikel hergestellt nach dem Verfahren zur Konfektionierung von Folien nach einem der vorhergehenden Ansprüche, insbesondere Unterdachbahn, Dampfbremse, Abdichtung von Flachdächern, Abdichtung von Teichen, Abdichtung von Schwimmbecken, Abdichtung von Tanks, Metallfolien, und/oder Blech.
